(19) Europäisches Patentamt
European Patent Office
Office européen des brevets

(11) **EP 1 844 993 A1**

(12) **EUROPEAN PATENT APPLICATION**

(43) Date of publication:
**17.10.2007 Bulletin 2007/42**

(51) Int Cl.:
**B60R 21/34** *(2006.01)*    **B62D 25/10** *(2006.01)*

(21) Application number: **06075920.6**

(22) Date of filing: **11.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Menzolit-Fibron GmbH**
  **75015 Bretten (DE)**
• **Corus Staal BV**
  **1970 CA  Ijmuiden (NL)**

(72) Inventors:
• **Stachel, Peter Hans**
  **76703 Kraichtal (DE)**

• **Clough, Andrew Jonathan**
  **Stratford upon Avon**
  **Warickshire CV37 7HU (GB)**
• **Bastien, Christophe**
  **Coventry CV4 7DN (GB)**
• **Reding, Gilles**
  **76133 Karlsruhe (DE)**

(74) Representative: **Kruit, Jan**
  **Corus Technology BV**
  **Corus Intellectual Property Department**
  **PO Box 10000**
  **1970 CA  IJmuiden (NL)**

(54) **Vehicle hood for improved pedestrian safety**

(57)     The invention relates to a vehicle body part for the outer body of a vehicle, such as a hood, the body part comprising an outer skin layer (10), a rigid lightweight core layer (11) and an inner layer (12) which is impermeable for fluids at the side of the core layer opposite to the skin layer.

Fig. 1

EP 1 844 993 A1

**Description**

The present invention relates to a vehicle body part having improved deflection behaviour under impact, for example a vehicle hood (bonnet), to reduce the likelihood of head injury when the vehicle is in collision with e.g. a pedestrian or a cyclist.

A vehicle hood is usually taken to mean a hinged part that (on a front-engined vehicle) when opened, allows access to the engine. However, it should be appreciated that the means provided by the invention is applicable to other bodywork, hinged or otherwise attached, or other products wherein a certain impact behaviour is to be realised.

At present the hood on a vehicle is manufactured from two key elements, an outer and an inner. The outer element is generally a continuous sheet of pressed metal, e.g. made of steel or aluminium. The inner element is also pressed metal but shaped to provide the strength required for secure attachment to the vehicle as well as the stiffness required in order to maintain its shape under a wide range of service and handling conditions. The shape of the inner is either in the form of a series of hat section stiffeners, or a continuous sheet having a series of dimples. Both the hat section and the deep dimple approach result in a hood with regions of low and high stiffness under pedestrian head impact conditions.

Nowadays the metal thickness used for the outer layer of a vehicle hood is 0.7mm for steel and 1.1 mm for aluminium; this has been optimised to resist local denting and general distortion. Vehicle manufacturers would like to use thinner gauges in order to save weight and cost but are unable to do so without reducing the durability performance of the hood.

A problem of the known hood construction is that it may result in an unacceptably high risk of injury to the heads of pedestrians. The risk of injury is defined as HIC (Head Injury Criterion, also known as HPC) value and is derived from the acceleration/time response of an instrumented dummy headform projected at a vehicle hood under laboratory conditions.

The HIC value discussed here is derived from this equation:

$$ HIC = \left[ \frac{1}{(t_2 - t_1)} \int_{t_1}^{t_2} a(t) dt \right]^{2.5} (t_2 - t_1) $$

The duration of the period of high deceleration is given by the expression $(t_2 - t_1)$. To achieve low HIC it is necessary to reduce this duration period.

For pedestrian safety purposes, the optimum hood should have low HIC values; this may be achieved with a hood constructed to be very soft and easily deformed. However such a hood can only be used in such a situation where there is a large amount of room between the underside of the hood and the hard points in the engine compartment: contact between the headform and a hardpoint would give an unacceptably high HIC. Furthermore, it is not possible to raise the height of the hood since the vehicle hood must have a minimum clearance above the engine to give a clear line of sight of the road for the driver.

It is most preferable for a vehicle hood to give a low HIC (below 1000) as well as a very low deflection (below 60mm).

In the prior art, WO 2005/075188, a self-supporting vehicle part with improved pedestrian safety properties is shown. The assembly disclosed in the publication has acceptable HIC (described here as HPC) of less than 1000, combined with good sound proofing properties, described here by an airflow resistance between 200 and 5,000 Ns/m$^2$. This assembly does not have any particular benefits in regard to low deflection under impact.

It is an object of the invention to provide an vehicle body part having improved behaviour under impact.

It is another object of the present invention to overcome the problem of deflection under impact.

It is also an object of the present invention to provide a vehicle hood with a low and predictable HIC value combined with very low deflection when impacted by a pedestrian headform.

It also an object of the present invention to achieve lightweighting in products by providing a suitable layered product, possibly further achieving benefits regarding but not limited to heat insulation and soundproofing.

One or more of the above objects is reached with a vehicle body part for the outer body of a vehicle, such as a hood, the body part comprising an outer skin layer, a rigid lightweight core layer and an inner layer which is impermeable for fluids at the side of the core layer opposite to the skin layer.

In such a vehicle body part, on impact, a combination of high bending stiffness and low mass is able to develop a high initial deceleration, combined with the rapid drop in deceleration that results in a low HIC and low deflection. Due to the impermeable inner layer the vehicle body achieves a low deflection under headform impact, also when the motor compartment under a vehicle hood is damp or wet and the inner layer gets moistened.

According to a preferred embodiment, the body part has a HIC value less than 800, preferably between 300 and 600. This HIC value gives a very low head injury when a pedestrian is hit.

Preferably, the deflection of the vehicle body part under headform impact is less than 65 mm, more preferably less than 55 mm, even more preferably less than 45 mm. This low deflection makes it possible to use the vehicle hood according to the invention over existing motor compartments, or on other parts of an existing vehicle.

According to a preferred embodiment the outer skin layer has been made of a metal. One of the possibilities is that the outer skin layer has been made of steel, preferably the steel layer having a thickness of 0.5 to 1.0 mm. Another possibility is that the outer skin layer has been made of aluminium, preferably the aluminium layer having a thickness of 0.6 to 1.2 mm.

According to a preferred embodiment the lightweight core material comprises honeycomb material, preferably the honeycomb material being cardboard or paper. This material is very lightweight and possessed a good stiffness, while at the same time it can deform under impact rather easily.

Preferably the honeycomb layer has a thickness of 4 to 10 mm and preferably a cell size of 3 to 5 mm. These values make it possible to use the body part as a vehicle hood or bonnet which remains thin.

According to a preferred embodiment the inner layer consists of a fibre reinforced polymer layer, preferably having a thickness between 0.5 and 3 mm. Such an inner layer provides the required stiffness and strength to the vehicle body part.

Preferably the outer skin layer is joined to the core layer, more preferably by adhesive means. In this way the best use is made of the stiffness and other advantages of the honeycomb layer in particular.

It is also preferable when the core layer is joined to the inner layer, preferably by adhesive means. The advantages apply mutatis mutandis as above.

According to a preferred embodiment the inner layer has been covered by an aluminium or aluminised foil. This foil provides for a heat protection for the body part, especially in case of a hood or bonnet.

Preferably the core layer has a variable thickness, more preferably a reduced thickness along one or more sections or edges. This makes it possible to give a body part a way of deformation that is predetermined by the thickness variations of the core.

According to another aspect of the invention transportation means, such as an automobile, are provided with the vehicle body part as elucidated above.

The present invention allows for the optimal deflection of a vehicle hood upon the occurrence of head impact, allowing for both reduced risk of injury to the head with a design that protects for minimal distance to underhood componentry, and therefore allows for the design and manufacture of vehicles without the need for either:

1) expensive redesign of underhood componentry, or

2) expensive 'activated' hood that lifts immediately prior to impact with the pedestrian's head.

The present invention allows for a vehicle hood that is substantially undamaged after impact with a pedestrian, road debris and other abuse or accidental impacts. Such a feature is not required by legislation, however it can be seen that more durable vehicle body components reduce the cost of ownership of the vehicle by reducing the need for repair.

The present invention allows for a vehicle hood that uses thinner gauge outer panel materials, in either steel or aluminium, since the construction according to this patent imparts greater stiffness to the hood at the same time as improving the dent and damage resistance.

By the engineering of an optimal combination of layers of materials, with carefully selected thicknesses and properties it can be shown that the HIC value for an headform impact can be minimised and can at the same time limit the deflection caused by the head impact. By this means the HIC value can be reduced to even less than the value of 1000 called for by the legislation an be as low as e.g. 500, this results in far less injury to a pedestrian.

It is remarked here that it is known that in the automotive industry there are a number of materials that may be laminated to the reverse side of a metal panel; these are e.g. acoustic damping sheets and are generally based on either a low modulus polymer or a bitumen type material. These materials may be applied to the body-in-white by seff-adhesion, a separate adhesive film or sprayed in place. The function of these materials is to dampen the transmission of noise. Other grades of laminate that are attached to vehicle body panels include materials made up of epoxy resin and glass fibre that are applied locally, e.g. by self-adhesion. The epoxy resin then hardens during the paint oven cycle, bonds to the outer, and the resulting laminate forms a local strengthening component. The function of these materials is to support areas of bodywork that may be subject to local loading e.g. adjacent to the door handle.

Although the hood design using a product according to the invention enables the deletion of most of the (conventional) hood inner it is envisaged that some residual component of the pressed metal inner be retained as a peripheral frame functioning as attachment for hinges, props, latches, guides and stops.

By choosing the composition of the sandwich structure layers in accordance with the invention, it is possible to achieve predictable impact behaviour over a wide range of ambient conditions, such as temperature and humidity, for the useful life of a vehicle.

Furthermore, by its rigid nature, the sandwich structure prevents visible vibration (known as fluttering) of the hood under wind and/or road loads.

By its rigid nature and connection to the metallic layer, the honeycomb cored sandwich structure enhances the resistance to denting caused either by local impacts e.g. from road chippings, hailstones and debris, or by service loads, e.g. hand slamming.

Preferably, the honeycomb comprises a recycled product such as paper. This type of honeycomb is suitable and cost attractive.

The honeycomb may be constructed with a regular six-sided cell in the same way as traditional aluminium honeycomb, or indeed the honeycomb belonging to a beehive. The honeycomb may also be constructed by alternate layers of corrugated and flat sheet, a lower cost manufacturing method preferred by the packaging industry.

An excellent product suitable to be used in a pedestrian safe hood is provided according to the invention if one layer is either steel with a thickness of 0.5 to 1 mm, or aluminium with a thickness of 0.8 to 1.6 mm, the core layer is of honeycomb cardboard with a thickness of 4 to 9.5 mm, and the third layer being a fibre reinforced polymer with a thickness between 0.5 and 3mm.

The invention is also embodied in a number of processes of producing a vehicle body part with improved deflection behaviour under impact, the process comprising the steps:

- attaching a honeycomb layer to the metallic outer hood via adhesive, attaching a sheet of fibre reinforced polymer to the honeycomb either by adhesive or by the self adhesive nature of the fibre reinforced nature of the fibre reinforced polymer.
- manufacturing a fibre reinforced polymer sheet, where the fibres may be synthetic; glass, carbon, aramid, or metallic, or the fibre may be a natural organic material; jute, sisal, flax or hemp. The polymer matrix material may be chosen from the thermoset type, unsaturated polyester, epoxy, vinylester, phenolic, acrylic or the thermoplastic type; polyethylene, polypropylene, polyamide, polyacetal, polyester, polycarbonate or polyurethane.
- curing the resulting body part, either in a dedicated oven or simultaneously with an existing oven process, e.g. used to harden the adhesive used in the hem joint of the hood.

It has also been found that it is possible to pre-assemble the honeycomb core to the fibre-reinforced polymer layer, thus reducing the number of hood manufacturing steps.

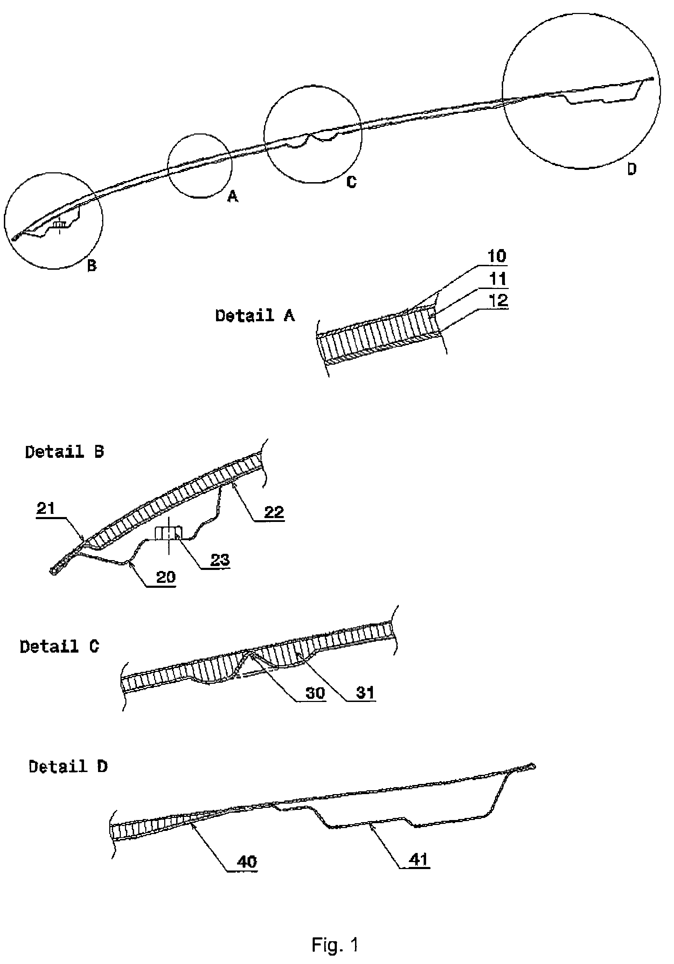

In an embodiment according to the invention (See Fig 1), the honeycomb layer is made of recycled paper, with a cell size of 4 mm and a thickness of 9.5 mm.

It has also been found that:a film left in place on the free surface of the fibre reinforced polymer layer may be made of aluminium or an aluminised foil; being advantageous where heat reflection back into the underhood or engine compartment is required.

It has also been found that selective thinning of the honeycomb core gives a number of benefits:

- improved clearance of underhood components where necessary
- reduction in section stiffness locally to counter the effects of shape in the hood outer pressing
- allowing for the hood to collapse in a benign fashion at a position approximately half way along its length when required in e.g. a frontal collision.
- tapering of the edge to negate any surface deformation in the hood outer surface (known as 'print through') due to a rapid stiffness change in the supporting structure.

It has also been found that selective thickening of the honeycomb gives a number of benefits:

- supplying increased stiffness in a particularly flat area of the hood
- to package reinforcing members and or attachment plates

Preferably, the process according to the invention is carried out so as to obtain a body part which is a product according to the invention as described herein above.

The honeycomb sandwich layers can be applied directly (laminated) to the metallic layer, using either a liquid adhesive or solid film adhesive.

The honeycomb sandwich layers forming the inner panel may, after lamination to the hood outer, be cured in a conventional vehicle production line oven, with curing times and temperature within the normal range required to cure the conventional hood hem flange adhesive, e.g. 170°C for 10 minutes, negating the cost of extra operations and equipment.

The honeycomb sandwich layers are designed to replace the conventional inner metal framework, both providing all the structural requirements as well as greatly reducing injury to a pedestrian's head in the event of a collision.

The honeycomb sandwich layers are easily and cost effectively tuneable to the impact requirements of a wide range of hood shapes and sizes by adapting the thickness of the honeycomb and/or the thickness and fibre content of the reinforcement layer.

Since the shape and styling of a vehicle hood are fixed very early in the development program, a laminate material with strength and stiffness that can be tuned to suit a particular hood style is a great advantage.

Another advantage is the inner panel having sound deadening properties sufficient to allow a cost saving through deletion of all or part of the existing under hood soundproofing.

By its nature as a structure with a core of closed cell air pockets, the honeycomb core insulates the hood outer from the heat of the engine bay and, where applicable, saving the cost of a heat shield.

The invention will now be illustrated by the following non-limiting examples.

Fig 1 shows the general construction of a vehicle hood according to this invention.

Detail A shows the composition of the layers; item 10 is the outer metallic skin of the hood, item 11 is the honeycomb core and item 12 is the fibre reinforced polymer layer.

Detail B shows a section through the front part of the hood, item 20 is part of an inner cross member component that attaches to the front of the hood outer by a conventional hem joint. Item 21 shows the fibre reinforced inner joined to the outer as part of the hem joint. Item 22 shows where the inner cross member joins to the fibre reinforced inner by means of adhesive (not shown). Item 23 is a captive nut which is for the attachment of the hood latch mechanism.

Detail C shows a notch in approximately the centre of the hood (from front to back)this enables the hood to fold in a benign fashion during frontal impact.

Detail D shows an alternate method of eliminating the read-through distortion at the edge of the honeycomb.

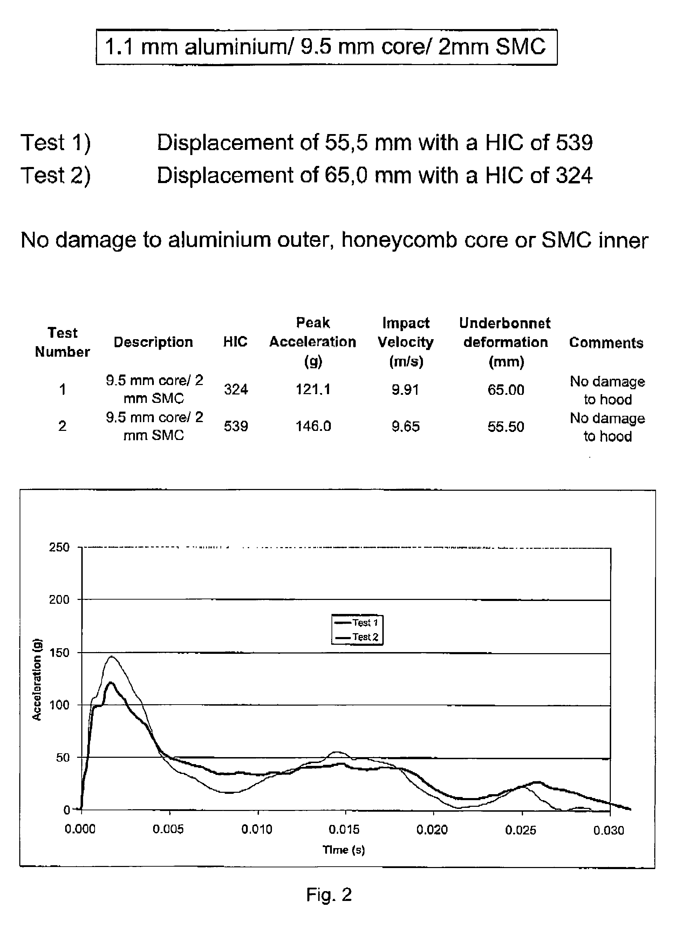

Fig 2 shows the results of tests on the hood as described in Fig 1. In this example the metallic outer layer is aluminium at 1.1 mm thick, the honeycomb core is made of corrugated cardboard and is 9.5 mm thick and the fibre-reinforced layer is made of sheet moulding compound (SMC) and is 2 mm thick.

The hood has been tested according to the current European pedestrian safety legislation that came into force in the U.K. and other European Countries in October 2005 and is known as Directive 2003/102/EEC.

The hood was fixed to a purpose designed test rig at the MIRA, an independent vehicle test authority in Nuneaton, Warwickshire, England. The hood was impacted on two points; the resultant acceleration vs. time curves are labelled test 1 and test 2. By applying the HIC equation to these curves we get the HIC values of 324 and 539, with corresponding deflection values of 65 mm and 55.5 mm.

**Claims**

1. A vehicle body part for the outer body of a vehicle, such as a hood, the body part comprising an outer skin layer, a rigid lightweight core layer and an inner layer which is impermeable for fluids at the side of the core layer opposite to the skin layer.

2. Vehicle body part according to claim 1, wherein the body part has a HIC value less than 800, preferably between 300 and 600.

3. Vehicle body part according to claim 1 or 2, wherein the deflection of the vehicle body part under headform impact is less than 55 mm, preferably less than 45 mm.

4. Vehicle body part according to any one of the preceding claims, wherein the outer skin layer has been made of a metal.

5. Vehicle body part according to any one of the preceding claims, wherein the outer skin layer has been made of steel, preferably the steel layer having a thickness of 0.5 to 1.0 mm.

6. Vehicle body part according to any one of the preceding claims, wherein the outer skin layer has been made of aluminium, preferably the aluminium layer having a thickness of 0.6 to 1.2 mm.

7. Vehicle body part according to any one of the preceding claims, wherein the lightweight core material comprises honeycomb material, preferably the honeycomb material being cardboard or paper

8. Vehicle body part according to claim 7, wherein the honeycomb layer has a thickness of 4 to 10 mm and preferably a cell size of 3 to 5 mm.

9. Vehicle body part according to any one of the preceding claims, wherein the inner layer consists of a fibre reinforced polymer layer, preferably having a thickness between 0.5 and 3 mm.

10. Vehicle body part according to any one of the preceding claims, wherein the outer skin layer is joined to the core layer, preferably by adhesive means.

11. Vehicle body part according to any one of the preceding claims, wherein the core layer is joined to the inner layer, preferably by adhesive means.

12. Vehicle body part according to any one of the preceding claims, wherein the inner layer has been covered by an aluminium or aluminised foil.

13. Vehicle body part according to any one of the preceding claims, wherein the core layer has a variable thickness, preferably having a reduced thickness along one or more sections or edges.

14. Transportation means, such as an automobile, provide with the vehicle body part according to any one of the preceding claims.

Detail A

10
11
12

Detail B

21

22

23

20

Detail C

30    31

Detail D

40

41

Fig. 1

## 1.1 mm aluminium/ 9.5 mm core/ 2mm SMC

Test 1)        Displacement of 55,5 mm with a HIC of 539
Test 2)        Displacement of 65,0 mm with a HIC of 324

No damage to aluminium outer, honeycomb core or SMC inner

| Test Number | Description | HIC | Peak Acceleration (g) | Impact Velocity (m/s) | Underbonnet deformation (mm) | Comments |
|---|---|---|---|---|---|---|
| 1 | 9.5 mm core/ 2 mm SMC | 324 | 121.1 | 9.91 | 65.00 | No damage to hood |
| 2 | 9.5 mm core/ 2 mm SMC | 539 | 146.0 | 9.65 | 55.50 | No damage to hood |

Fig. 2

EP 1 844 993 A1

## EUROPEAN SEARCH REPORT

**European Patent Office**

Application Number

EP 06 07 5920

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | FR 2 873 086 A (UNIVERSITE LOUIS PASTEUR) 20 January 2006 (2006-01-20)<br>* page 7, line 30 - page 9, line 21; figures 2,3 * | 1,4-8,14<br><br>10,11 | INV.<br>B60R21/34<br>B62D25/10 |
| X | WO 03/047842 A (DOW GLOBAL TECHNOLOGIES INC; CATE, PETER, JAMES; NAUGHTON, PADRAIG, JO) 12 June 2003 (2003-06-12)<br>* page 11, line 8 - page 14, line 3; figures 1,3 * | 1,4-6,<br>9-11,14 | |
| X | EP 1 022 199 A (VOLKSWAGEN AKTIENGESELLSCHAFT) 26 July 2000 (2000-07-26)<br>* paragraph [0012] - paragraphs [0016] - [0020] * | 1,3-8,<br>10,11,14 | |
| X | EP 1 000 821 A (VOLKSWAGEN AKTIENGESELLSCHAFT) 17 May 2000 (2000-05-17)<br>* paragraphs [0018] - [0020], [0025], [0026]; claims 5-9; figures 1,2 * | 1,4,7,<br>12,14 | |
| D,X | WO 2005/075188 A (RIETER TECHNOLOGIES AG; BUISSON, CLAUDE) 18 August 2005 (2005-08-18)<br>* page 4, line 1 - line 27; figures 1,5,6 *<br>* page 6, line 1 - line 6 * | 1,4-8,<br>10-14 | TECHNICAL FIELDS SEARCHED (IPC)<br><br>B60R<br>B62D<br>B29D |

The present search report has been drawn up for all claims

| Place of search | Date of completion of the search | Examiner |
|---|---|---|
| Munich | 17 August 2006 | Cipriano, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 07 5920

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2006

| Patent document cited in search report | | Publication date | Patent family member(s) | | Publication date |
|---|---|---|---|---|---|
| FR 2873086 | A | 20-01-2006 | WO | 2006016053 A2 | 16-02-2006 |
| WO 03047842 | A | 12-06-2003 | AU | 2002349150 A1 | 17-06-2003 |
| EP 1022199 | A | 26-07-2000 | AT | 297854 T | 15-07-2005 |
| | | | DE | 19902311 A1 | 27-07-2000 |
| EP 1000821 | A | 17-05-2000 | AT | 239629 T | 15-05-2003 |
| | | | DE | 19851472 A1 | 11-05-2000 |
| WO 2005075188 | A | 18-08-2005 | NONE | | |

For more details about this annex : see Official Journal of the European Patent Office, No. 12/82

EP 1 844 993 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005075188 A